# EUROPÄISCHE PATENTSCHRIFT

(11) **EP 1 872 990 B1**
(45) Veröffentlichungstag und Bekanntmachung des Hinweises auf die Patenterteilung: **11.05.2011**
(21) Anmeldenummer: 07006627.9
(22) Anmeldetag: 30.03.2007
(51) Int. Cl.: B60J 7/057

(54) **Personenkraftwagen mit Fondsitzen**
Passenger vehicle with rear seats
Véhicule de transport de passagers doté de sièges arrières

(30) Priorität: 28.06.2006 DE 10629868
(43) Veröffentlichungstag der Anmeldung: 02.01.2008
(73) Patentinhaber: AUDI AG, 85045 Ingolstadt (DE)
(72) Erfinder: Alliger, Michael, 85080 Gaimersheim (DE)
(74) Vertreter: Engelhardt, Harald

(56) Entgegenhaltungen:
- EP-A1- 0 550 952
- EP-A2- 0 943 472
- EP-A2- 0 943 473
- DE-A1- 4 338 102
- DE-C1- 4 438 191
- US-A- 4 796 943

## Beschreibung

Die Erfindung bezieht sich auf einen Personenkraftwagen mit Fondsitzen, einem motorisch verfahrbarenDachteil, einer Schaltvorrichtung, durch deren kurzzeitige Betätigung das Dachteil ohne weiteres Zutun selbsttätig in die Offen- oder Schließstellung verfährt, sowie mit einer Einrichtung die sicherstellt, dass bei durch Personen belegten Fondsitzen das Dachteil nicht selbsttätig durch Auslösung der Schaltvorrichtung, sondern nur durch permanentes Betätigen der Schaltvorrichtung bewegbar ist

Bei Fahrzeugen mit einem verfahrbaren Dachteil besteht das Problem, dass durch das Verfahren des Dachteils bzw. eines Verdecks auf den Fondsitzen untergebrachte Personen gefährdet werden können. Zur Lösung dieses Problems wird in der EP 0943473 B1 ein Sensor zum Überwachen eines Sicherheitsbereiches zwischen dem Fahrzeuginsassen und dem Verdeck vorgeschlagen. Dadurch wird eine automatisierte Bewegung des Verdecks ausgeschlossen, wenn sich eine Person in dem Sicherheitsbereich befindet. Erfolgt ein Eingriff in den Sicherheitsbereich während der Bewegung des Verdecks, kommt es unverzüglich zu einem Stillsetzen des Antriebs. Durch diese Maßnahme braucht der Fahrer, z.B. beim Öffnen des Verdecks, während der Betätigung des entsprechenden Schalters nicht die übrigen Fahrzeuginsassen zu überwachen, um ggf. durch Stoppen der Verdeckbewegung ein Verletzungsrisiko auszuschließen. Zur Überwachung des Sicherheitsbereiches wird eine Kamera, ein Infrarotsensor und/oder ein Ultraschallsensor vorgeschlagen.

Eine weitere Einrichtung ist aus der EP 0943472 B1 bekannt. Auch dort wird bei der Bewegung eines Dachteiles die rückwärtige Sitzbank überwacht.

Schließlich zeigt und beschreibt die DE 4438191 C1 einen Kraftwagen mit einem zumindest teilweise versenkbaren Dach, welches manuell oder auf Knopfdruck durch einen motorischen Hilfsantrieb bewegbar ist. Um die Bedienungssicherheit zu vergrößern, kann für die Rücksitzbank eine Sitzbelegungserkennung vorgesehen sein.

Der vorliegenden Erfindung liegt die Aufgabe zugrunde, mit besonders einfachen Mitteln die Sicherheit beim Verfahren eines Dachteiles zu erhöhen.

Die Aufgabe wird dadurch gelöst, dass der Personenkraftwagen mit einem Windschott ausrüstbar ist welches neben einem senkrechten Abschnitt auch einen waagrechten, sich über den Fondsitzen erstreckenden Abschnitt aufweist, und dass durch das montierte Windschott ein Signal ausgelöst wird, welches eine selbsttätige Bewegung des Dachteiles in die Offen- oder Schließstellung durch eine kurzzeitigen Betätigung der Schaltvorrichtung ermöglicht.

Die erfindungsgemäße Lösung basiert auf der Tatsache, dass bei einem Windschott welches neben einem senkrechten Abschnitt auch einen waagrechten, sich über den Fondsitzen erstreckenden Abschnitt aufweist, keine Person auf den Fondsitzen untergebracht werden kann. Wenn diese Tatsache, also das montierte Windschott, gegeben ist, dann kann das Dachteil uneingeschränkt motorisch verfahren werden. Ist hingegen das Windschott nicht montiert, d.h. dass möglicherweise Personen auf den Fondsitzen untergebracht sind, lässt sich das Dachteil nur unter besonderer Aufsicht der Bedienperson motorisch verfahren. Dies kann bspw. dadurch geschehen, dass die Bedienperson den Schalter zum Verfahren des Dachteiles permanent drückt. Beim Loslassen des Schalters erfolgt eine sofortige Stillsetzung des Antriebs.

Gemäß einer vorteilhaften Ausgestaltung der Erfindung kann das montierte Windschott einen karosseriefesten Mikroschalter auslösen. Die Anordnung dieses Mikroschalters kann je nach den vorhandenen baulichen Gegebenheiten sehr unterschiedlich sein. Es muss nur sichergestellt werden, dass bei montiertem Windschott der Mikroschalter auch betätigt wird. Durch die erfindungsgemäße Anordnung ist es jedoch so, dass selbst dann, wenn das Windschott nicht richtig montiert ist, kein Schaden entstehen kann. In diesem Fall, also wenn der Mikroschalter nicht betätigt wird, wird die Situation simuliert, dass Personen auf den Fondsitzen untergebracht sind. Das hat zur Folge, dass das Dachteil nur durch permanentes Betätigen der Schaltvorrichtung bewegbar ist.

Gemäß einer vorteilhaften Ausgestaltung der Erfindung umfasst die Schaltvorrichtung einen Schalter mit Tippfunktion, dessen kurzzeitige Betätigung das Verfahren des Dachteiles auslöst. Ein solcher Schalter mit Tippfunktion ist von der Handhabung sehr angenehm, da das Verfahren des Dachteiles bewirkt wird, ohne dass ein ständiges Drücken des Schalters notwendig ist. Dabei ist durch die eingangs beschriebene Maßnahme sichergestellt, dass das Dachteil über die Tippfunktion nur verfahrbar ist, wenn das Windschott montiert ist, sich also keine Personen auf den Fondsitzen befinden können.

Schließlich kann die Steuerung so ausgeführt sein, dass bei nicht montiertem Windschott und dadurch fehlendem Signal die Tippfunktion blockiert ist. Somit lässt sich in einfacher Weise sicherstellen, dass die Tippfunktion immer dann möglich ist, wenn keine Person auf einen Rücksitzplatz einnimmt. Ist hingegen mindestens einer der Rücksitzplätze belegt, dann kann das verfahrbare Dachteil zwar bewegt werden, jedoch nur unter Aufsicht der Bedienperson. Das heißt, dass zum Bewegen des Dachteiles der Schalter permanent gedrückt werden muss. Sollte sich eine kritische Situation ergeben, dann erfolgt durch Loslassen des Schalters ein sofortiger Stopp der Verdeckbewegung:

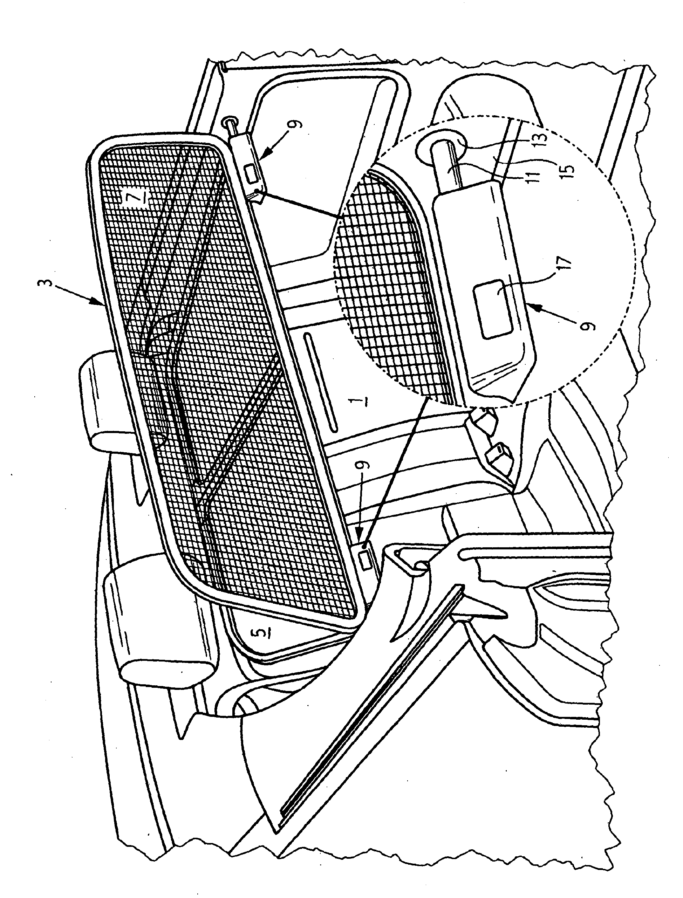

Ein Ausführungsbeispiel der Erfindung ist in der Zeichnung dargestellt und wird nachfolgend näher beschrieben.

Die perspektivische Darstellung zeigt einen als Cabriolet ausgeführten Personenkraftwagen mit Fondsitzen 1. Über den Fondsitzen ist ein Windschott 3 angeordnet, welches sich aus zwei horizontalen Abschnitten 5 und einem vertikalen Abschnitt 7 zusammensetzt. Zur Arretierung des Windschott 3 sind seitliche Halteeinrichtungen 9 vorgesehen, deren Zapfen 11 in Aufnahmen 13 der Innenverkleidungen 15 einführbar sind. In der eingeschobenen Position können die Zapfen 11 in den Aufnahmen 13 verrasten. Zum Lösen der Verrastung sind in den Halteeinrichtungen 9 Tasten 17 vorgesehen. Werden diese gedrückt und die Halteeinrichtungen zur Fahrzeugmitte hin verschoben, dann kann das Windschott 3 entnommen werden.

Bei montiertem Windschott 3, also dann, wenn die Zapfen 11 verrastet sind, betätigt zumindest ein Zapfen 11 einen Mikroschalter. Dieser Mikroschalter ist hinter der Innenverkleidung 15 angeordnet und deshalb in der Zeichnung nicht wiedergegeben.

In dem vorbeschriebenen Zustand, also wenn der Zapfen 11 den Mikroschalter betätigt, kann das Verdeck des Fahrzeuges motorisch verfahren werden. Wird der Mikroschalter nicht betätigt, wird der Motor für das Verdeck stillgelegt, da Personen auf den Fondsitzen 1 sitzen könnten.

## Patentansprüche

1. Personenkraftwagen mit Fondsitzen, einem motorisch verfahrbaren Dachteil, einer Schaltvorrichtung, durch deren kurzzeitige Betätigung das Dachteil ohne weiteres Zutun selbsttätig in die Offen- oder Schließstellung verfährt, sowie mit einer Einrichtung die sicherstellt, dass bei durch Personen belegten Fondsitzen das Dachteil nicht selbsttätig durch Auslösung der Schaltvorrichtung, sondern nur durch permanentes Betätigen der Schaltvorrichtung bewegbar ist, **dadurch gekennzeichnet, dass** der Personenkraftwagen mit einem Windschott (3) ausrüstbar ist welches neben einem senkrechten Abschnitt (7) auch einen waagrechten, sich über den Fondsitzen erstreckenden Abschnitt (5) aufweist, und dass durch das montierte Windschott (3) ein Signal ausgelöst wird, welches eine selbsttätige Bewegung des Dachteiles in die Offen- oder Schließstellung durch eine kurzzeitigen Betätigung der Schaltvorrichtung ermöglicht.

2. Personenkraftwagen nach Anspruch 1, **dadurch gekennzeichnet, dass** das montierte Windschott (3) einen karosseriefesten Mikroschalter auslöst.

3. Personenkraftwagen nach Anspruch 1 oder 2, **dadurch gekennzeichnet, dass** die Schaltvorrichtung einen Schalter mit Tippfunktion umfasst.

4. Personenkraftwagen nach Anspruch 3, **dadurch gekennzeichnet, dass** bei nicht montiertem Windschott und **dadurch** fehlendem Signal die Tippfunktion blockiert ist.

## Claims

1. Passenger vehicle with rear seats, a roof part which is moveable in a motorized manner, a switching device, the momentary actuation of which automatically moves the roof part without further action into the open or closed position, and with a mechanism ensuring that, when the rear seats are occupied by people, the roof part is not movable automatically by triggering of the switching device but rather only by permanent actuation of the switching device, **characterized in that** the passenger vehicle can be equipped with a wind deflector (3) which, in addition to a vertical section (7), also has a horizontal section (5) extending over the rear seats, and **in that** the erected wind deflector (3) triggers a signal permitting automatic movement of the roof part into the open or closed position by momentary actuation of the switching device.

2. Passenger vehicle according to Claim 1, **characterized in that** the erected wind deflector (3) triggers a microswitch mounted on the bodywork.

3. Passenger vehicle according to Claim 1 or 2, **characterized in that** the switching device comprises a switch with a touch control function.

4. Passenger vehicle according to Claim 3, **characterized in that** the touch control function is blocked when the wind deflector is not erected and the signal is as a result absent.

## Revendications

1. Véhicule de transport de passagers comprenant des sièges arrière, une partie de toit déplaçable par un moteur, un dispositif de commutation, dont l'actionnement de courte durée déplace la partie de toit automatiquement sans autre manipulation dans la position d'ouverture ou de fermeture, et un système qui garantit que, lorsque les sièges arrière sont occupés par des passagers, la partie de toit ne puisse pas être automatiquement déplacée par déclenchement du dispositif de commutation, mais seulement par un actionnement permanent du dispositif de commutation, **caractérisé en ce que** le véhicule de transport de passagers peut être équipé d'un déflecteur de vent (3) qui présente, en plus d'une portion verticale (7), également une portion horizontale (5) s'étendant au-dessus des sièges arrière, et **en ce qu'**un signal est déclenché par le déflecteur de vent monté (3), lequel permet un déplacement automatique de la partie de toit dans la position d'ouverture ou de fermeture par un actionnement de courte durée du dispositif de commutation.

2. Véhicule de transport de passagers selon la revendication 1, **caractérisé en ce que** le déflecteur de vent monté (3) déclenche un minirupteur fixé à la carrosserie.

3. Véhicule de transport de passagers selon la revendication 1 ou 2, **caractérisé en ce que** le dispositif de commutation comprend un commutateur à commande par effleurement.

4. Véhicule de transport de passagers selon la revendication 3, **caractérisé en ce que** la commande par effleurement est bloquée lorsque le déflecteur de vent n'est pas monté et qu'il n'y a donc pas de signal.
